# EUROPEAN PATENT SPECIFICATION

(11) **EP 3 277 139 B1**
(45) Date of publication and mention of the grant of the patent: **01.07.2020**
(21) Application number: 16712334.8
(22) Date of filing: 30.03.2016
(51) Int. Cl.: A47J 31/44

(54) **SLIDABLE CUP SUPPORT**
VERSCHIEBBARER BECHERTRÄGER
SUPPORT DE GOBELET COULISSANT

(30) Priority: 02.04.2015 EP 15162303
(43) Date of publication of application: 07.02.2018
(73) Proprietor: Société des Produits Nestlé S.A., 1800 Vevey (CH)
(72) Inventor: AGON, Fabien Ludovic, 1358 Valeyres-Sous-Rances (CH); BYUN, Da Mi, 1007 Lausanne (CH); HANAUER, Bianca, 80799 München (DE); MAGATTI, Marco, 1010 Lausanne (CH); MAYER, Markus Johannes, 81369 München (DE); SCHMIEDBAUER, Matthias, 80336 München (DE)
(74) Representative: Schnyder, Frank Simon
(86) International application number: PCT/EP2016/056878
(87) International publication number: WO 2016/156367

(56) References cited:
- EP-A1- 1 639 926
- EP-A1- 2 342 997
- WO-A1-2014/056821
- DE-U1-202009 001 492

## Description

### Field of the Invention

The field of the invention pertains to beverage dispensing machines having a beverage outlet and a movable cup support for placing short and tall user-recipients under the outlet.

### Background Art

Certain beverage preparation machines use capsules containing ingredients to be extracted or to be dissolved; for other machines, the ingredients are stored and dosed automatically in the machine or else are added at the time of preparation of the drink.

Most beverage machines possess within a housing: filling means that include a pump for liquid, usually water, which pumps the liquid from a source of water that is cold or indeed heated through heating means, such as a heating resistor, a thermoblock or the like, a brewing unit in which an ingredient is brewed with water or a mixing unit in which ingredients are mixed together, and a beverage outlet for dispensing the prepared beverage. Examples of fluid circuits are disclosed in US 2,715,868, 5,392,694, 5,943,472, 5,992,298, 6,554,588, WO 2006/032599, WO 2009/024500, WO 2009/150030 and WO 2010/006953. The brewing unit may be manual, as for instance disclosed in WO 2005/004683, WO2007/135136 and WO 2009/043630, or motorized, as for instance disclosed in EP1767129, WO 2012/025258, WO 2012/025259, WO 2012/093108, WO 2013/127476, WO 2014/056642, WO 2014/056821, WO 2014/060370, WO 2014/096122, WO 2014/096123, EP2014163793.4 and EP14163810.6, and the references cited therein.

The machines may be arranged to dispense beverages for small and large cups. Arrangements to properly position the cups under the outlet are known. Examples of such machines are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP2014198712.3, EP2014198710.7 and EP2014198715.6, and the references cited therein.

Such machines are usually arranged to be placed at some convenient location on a support surface in a kitchen or bar or in an office or in another suitable environment, typically close to the mains and to a source of water such as close to the kitchen sink, and are not easily movable. Moveable coffee machine are however known as disclosed in EP 1 878 368 and EP 1 864 598, and the references cited therein.

With the view of reducing the machine's footprint or operating volume, it is known to integrate the machine components, e.g. as disclosed in WO 2009/130099, WO 2012/072764, WO 2012/072766, WO 2012/093107, WO 2012/126971, WO 2013/127906. To adapt the shape of the machine to different environments, it is known to makes the machine articulated, e.g. as disclosed in WO 2012/055767 and WO 2013/104643.

### Summary of the Invention

An objective of the invention is to provide a solution or at least an alternative to the prior art configurations. A particular object of the invention is to provide a beverage dispensing machine that can be conveniently handle user-receptacles of different heights.

The invention thus relates to a machine for dispensing a beverage, such as a beverage prepared from a capsule containing a beverage ingredient.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage serving or a plurality of beverage servings.

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, e.g. in a concentrate form. A carrier or dilution liquid, e.g. water, may be mixed with such ingredient to form the beverage.

For instance, a predetermined amount of beverage is formed and dispensed on user-request, which corresponds to a serving. The volume of such a serving may be in the range of 25 to 200 ml or up to 300 or 400 ml, e.g. the volume for filling a cup or mug, depending on the type of beverage. Formed and dispensed beverages may be selected from ristrettos, espressos, lungos, cappuccinos, cafe latte, americano coffees, teas, etc... A coffee machine may be configured for dispensing espressos, e.g. an adjustable volume of 20 to 60 ml per serving, and/or for dispensing lungos, e.g. a volume in the range of 70 to 150 ml per serving.

The machine has an external housing having an external front face. The housing may have at least one of: one or more external lateral side faces; an external rear face; an external top face; and an external bottom face.

The machine may have a generally prismatic, e.g. parallelepipedic, main body over which the housing extends.

The machine includes a beverage outlet located on the external front face.

The machine comprises a user-receptacle support body that is movable between a first position for placing on a upper placement surface of the body a short user-receptacle under the outlet and a second position for placing a large user-receptacle under the outlet. Typically the first and second positions are predetermined and adjusted therefor. The first and second positions may be located in front of the external front face. Hence, the machine may be configured to dispense the beverage from the beverage outlet to cups of different sizes, such as short cups, e.g. espresso cups, and tall cups such as mugs, e.g. cappuccino cups.

Suitable advanced beverage outlet configurations, that include drop management arrangements, are for instance disclosed in WO 2006/050769, WO 2012/072758, WO 2013/127907, EP2014186738.2, EP2014195048.5 and EP14195067.5. For the purpose of implementing the present invention, such drop management is optional. For instance, a simple machine outlet of the type disclosed in US8091469 or WO 2009/074550 can be used.

The machine has a connection means for connecting the user-receptacle support body to the external front face. The user-receptacle support body has a connector that is connected or connectable to the connection means to maintain the user-receptacle body in the first and second positions. For instance, the connection means guides the user-receptacle body from the first position into the second position and vice versa.

In accordance with the invention, the connection means has a direction that extends generally along a bottom part of the external front face so that the user-receptacle support body is movable with its connector in connection with the connection means from the first position into the second position and vice versa along this direction that extends along the bottom part. For instance, the direction of the connection means extending on: the bottom part of the external front face; and/or a front area formed by a machine foot projecting in front of the bottom part of the external front face and extending along the external front face.

Hence, the support body is normally in connection with the connection means during the entire travel from the first position to the second position and vice versa. Consequently, the travel direction of the support body between the first and second positions can be entirely determined by the configuration of the connection means from the first to the second positions and vice versa.

The machine may have a machine bottom face, the direction of the connection means being generally parallel to the bottom face.

The machine can have two external spaced-apart lateral side faces, the user-receptacle support body being movable with its connector in connection with the connection means from the first position into the second position and vice versa along this direction (that extends generally along a bottom part of the external front face) from adjacent or close to one external lateral side face to adjacent or close to the other external lateral side face.

The connection means can have a mechanical arrangement comprising at least one of:
- a rail cooperating with a rail connector of the support body and/or a groove cooperating with a groove connector of the support body, such as a rail slider and/or groove slider of the support body having a single degree of freedom along the rail and/or the groove when connected thereto, the rail and/or groove and the rail and/or groove slider having optionally a generally dovetail shape for cooperating together along a single degree of freedom;
- a belt or chain secured to the user-receptacle support body and movable along the external front face, such as a belt or chain in an open or closed loop; and
- a local releasable positioner for guiding the support body into the first position or second position, such as a plug-and-socket positioner or a hook positioner or a snap positioner.

The connection means and the connector may be magnetically constrained.

The connector may have a magnetic field-generating element that is arranged to be magnetically constrained against a corresponding ferromagnetic element of the connection means.

The connection means can include a magnetic field-generating element that is arranged to be magnetically constrained against a corresponding ferromagnetic element of the connector.

The connection means may have a magnetic field-generating element that is arranged to be magnetically constrained against a corresponding magnetic field-generating element of the connector.

The magnetic field-generating element can include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

The ferromagnetic element may be made of at least one of of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Such magnetic field-generative element and/or such ferromagnetic element can be made of sub-elements dispersed in a polymer matrix or agglomerated with binder.

The connector can comprise one or more magnetic and/or ferromagnetic elements, e.g. pin or rod or cylinder or prism or spot element, the connection means comprising:
- one or more magnetic and/or ferromagnetic local positioner elements, e.g. pin or rod or cylinder or prism or spot element, on a path of the connector when the user-receptacle support body is moved between the first and second positions along the direction generally extending along the bottom part, such as at least one of discrete end-of-path positioners and intermediate positioners, e.g. a plurality of spaced apart positioners; and/or
- one or more path elements along a path of the connector when the user-receptacle support body is moved between the first and second positions along the above direction generally extending along the bottom part, optionally the connection means comprising stripe or bar or wire elements or a plurality of side-by-side local positioner elements along this direction to from a spotted path and/or end-of-path positioners defining the first and second positions of the user-receptacle support body.

The machine may include a capsule handling device that is located in the housing, such as behind the external front face, and that is fluidically connected to the outlet. The device can have a first part and a second part that are relatively movable between: a transfer position for receiving and/or evacuating a capsule containing a beverage ingredient; and an extraction position for extracting the capsule between the first and second parts.

The first and second parts can be movable manually, such as by a user-handle, and/or movable automatically, such as by a motor, between the transfer and the extraction positions.

The first and second parts may be arranged to form in the extraction position a mixing chamber for housing the capsule, e.g. a brewing chamber, such as a chamber delimited by at least a cavity in one of the first and second parts and by a cooperating cavity or lid formed by the other of the first and second parts.

Examples of suitable capsule handling devices, as well as their actuation (manual, automatic, semiautomatic, or fully motorized) and integration into a beverage machine, are provided in greater details in EP 1 646 305, EP 1 859 713, EP 1 859 714, WO 2009/043630, WO 2012/025258 and WO 2013/127476 and in the other references cited above.

At least one of the first and second parts of the capsule handling device can be arranged to translate towards and away from at least one of the two external lateral side faces when the first and second parts relatively move between the transfer and the extraction positions.

Such a configuration departs from a standard state of the art configurations, e.g. as disclosed in WO 2009/043630, in which the capsule handling device extends and moves longitudinally orthogonally to the machine's front face. In the latter configuration the machine extends narrowly behind the front face over a significant depth. In the present configuration, the machine has a large front face that extends over a short depth. Consequently, the machine can be placed on a support surface that has a short depth, e.g. a shelf.

Typically the machine may have an overall depth over its overall height of 10 to 30 cm, e.g. 15 to 25 cm. The overall height of the machine may be of the order of 20 to 35 cm, e.g. 25 to 30 cm. The machine's overall width can be about 25 to 45 cm, e.g. 35 to 40 cm.

For instance, the at least one of the first and second parts that is arranged to translate towards and away from the at least one of the two external lateral side faces is configured to move generally in parallel to at least one of: the external front face; the external rear face (when present); the external top face (when present); and the external bottom face (when present).

The first and second parts of the capsule handling device can be relatively movable between a transfer position for receiving and/or evacuating the capsule and an extraction position for extracting the capsule between the first and second parts along a translation axis that intercepts at least one of the first and second external lateral side faces. The translation axis may extend generally in parallel to at least one of: the external front face; the external rear face; the external top face; and the external bottom face.

The beverage preparation module may be connected to a source of liquid, e.g. water.

The source may be a liquid reservoir. Further details on suitable reservoirs are for example disclosed in WO2007/135136, WO 2010/128109, WO 2011/083103, WO 2011/089210 and EP 2 228 633.

The machine may include a fluid circuit for circulating beverage ingredient from the capsule when extracted between the first and second parts.

Examples of fluid circuits are disclosed in WO 2009/074550 and WO 2009/130099, the fluid sequence of which can be adapted in a machine according to the present invention.

For instance, the fluid circuit is fluidically connected to the source of liquid and comprising a liquid driver, such as a pump, for driving the liquid from the source into the capsule handling device for feeding the liquid to the capsule (and combining the liquid with the beverage ingredient of the capsule), for instance via a temperature conditioner, such as a heater and/or a cooler, and via an inlet of the first or second part.

Examples of modules provided with a fluid circuit including a thermal conditioner and/or a liquid driver are disclosed in EP 1 253 844, EP 1 380 243 and EP 1 809 151, WO 2009/074550, WO 2009/130099, WO 2009/150030, WO 2010/108700, WO 2011/107574 and WO 2013/098173.

The machine may include a user-interface configured to control the liquid driver to drive the liquid from the source of liquid into the capsule handling device.

The machine may have one or more further user-interfaces such as further user-interfaces for setting at least one parameter relating to beverage preparation, power management and machine servicing. Such beverage preparation parameters may relate to the beverage volumes, beverage temperatures as well as preparation sequences, such as beverages made of different phases such as more or less separate coffee and milk phases, e.g. cappuccinos and latte machiattos.

Typically, the user-interface(s) is/are connected to a control unit that controls the machine elements active for preparing the beverage. Such control units and active elements, e.g. liquid driver and thermal conditioner, etc... are well known in the art of beverage machines.

The at least one of the first and second parts that is arranged to translate towards and away from the at least one of the two external lateral side faces can be arranged to move generally in parallel to an overall direction of extraction of the beverage ingredient in the capsule when extracted between the first and second parts.

The machine may include a fluid guide for fluidically connecting the capsule handling device to the outlet along a guide direction, the overall direction of extraction and a direction of dispensing of the beverage out of the outlet extending along skew lines. For instance, the dispensing direction and the guide direction are in a plane that is generally orthogonal to the overall direction of extraction.

The machine can have a foot forming a lower placement surface for a large user-receptacle under the outlet and/or supporting the movable user-receptacle support body in at least one of the first and second positions.

The machine may include a liquid reservoir, such as a water thank, the liquid reservoir being in fluid connection with the fluid circuit.

The liquid reservoir can be removable from such machine for servicing, such as for filling, emptying and/or cleaning.

The liquid reservoir may be mounted on a machine foot, such as the above machine foot, which machine foot projects beyond:
- at least one of the external lateral side faces, the reservoir being located adjacent to one of the external side faces;
- the external front face, the reservoir being located adjacent to the external front face; or
- the external rear face (when present), the reservoir being located adjacent to the external rear face.

The liquid reservoir can have a shape that extends over substantially at least one of the entire external lateral side face and/or over substantially the entire external rear face.

The liquid reservoir may have a shape that is generally parallelpipedic.

The liquid reservoir can have a shape that is generally cylindrical with a circular or part-circular or crescent or elliptic or semi-elliptic base.

The external top face can have a capsule insertion opening leading into a passage for guiding the capsule to the capsule handling device and to a position between the first and second parts of the handling device in the transfer position which parts are then relatively movable to their extraction position for extracting the capsule. For instance, the capsule insertion opening is associated with a cover that is movable adjacent to the external housing, such as slidable and/or pivotable, between an open position away from the opening for allowing insertion of the capsule into the passage via the opening and a closed position over or across the opening to prevent insertion of the capsule into the passage via the opening.

Examples of such passages and covers are for example disclosed in WO2007/135136, WO 2012/072766, WO 2012/093107, WO 2012/126971, WO 2013/127906, WO 2014/056641, WO 2014/056642 and PCT/EP14/076211.

The machine may include comprises a user-interface which is operable by a user to extract the capsule between the first and second parts in their extraction position.

For instance, the user-interface is:
- covered by the cover when the cover is in the open position so that the user-interface is inoperable by the user when the capsule handling device is accessible from outside via the opening and the passage; and
- uncovered by the cover when the cover is in the closed position so that the user-interface is operable by the user when the capsule handling device is inaccessible from outside via the opening and the passage.

Hence, a user is prevented from operating the user-interface when the cover is not covering the opening. When the user-interface controls the circulation of liquid in the capsule handling device, the cover must first be moved onto the opening leading to the capsule handling device so that the user is not exposed to liquid or gas projections from the capsule handling device. Likewise, when the user-interface controls the relative movement of the first and second parts of the capsule handling device, the opening leading to the capsule handling device must first be covered by the cover before the user-interface can be operated by the user to cause the relative movement of the first and second parts of the capsule handling device, whereby the user is inhibited from sticking body parts (e.g. a finger) via the opening into the capsule handling device when the first and second parts are relatively moving.

The user-interface can be configured to control the above liquid driver to drive the liquid from the source of liquid into the capsule handling device.

The machine can include a seat for receiving a removable service unit via an opening in the external front face.

The service unit may comprise a receptacle for collecting waste material such as capsules upon use and/or residual liquid.

The service unit can have a feeder for supplying the beverage ingredient capsules and/or another ingredient for forming the beverage to be dispensed and/or a cleaning agent.

The service unit may be prevented from being removed or inserted into the seat by the above user-receptacle support body when the support body is adjacent to and in front of the opening:
- in the first position of the body, the service unit being removable or insertable into the seat when the support body is in the second position; or
- in the second position of the body, the service unit being removable or insertable into the seat when the support body is in the first position.

Examples of service units are disclosed in EP 1 731 065, EP 1 867 260, WO 2009/013778, WO 2009/074559, WO 2009/135869, WO 2010/128109, WO 2011/086087 and WO 2011/086088.

Hence, when the machine is mainly intended to be used for serving small beverages into short user-receptacle, the seat's opening for service unit may be located adjacent to and behind the support body in the first position, so that the service unit is prevented from being removed from the seat during the main use of the machine. Likewise, when the machine is mainly intended to be used for serving large beverages into short user-receptacle, the seat's opening for service unit may be located adjacent to and behind the support body in the second position, so that the service unit is prevented from being removed from the seat during the main use of the machine.

The capsule handling device can be so arranged as to evacuate the capsule to the removable service unit when located in the seat.

The beverage preparation machine can be an in-home or out of home machine. The machine may be a coffee, tea, chocolate, cacao, milk, soup, baby food, etc... preparation machine. The machine may be arranged for preparing within a beverage processing module, which may include (when present) the above capsule handling device, a beverage by passing hot or cold water or another liquid through a capsule containing an ingredient, such as a flavoring ingredient, of the beverage to be prepared, such as ground coffee or tea or chocolate or cacao or milk powder.

In the context of the present disclosure, the relative orientation of the machine, e.g. references to the machine's top, front, bottom, side, rear, etc., unless specified otherwise, typically relate to the orientation of operation of the machine, e.g. on top of a table, with the machine's outlet in front of a user for naturally operating the machine to dispense a beverage.

### Brief Description of the Drawings

The invention will now be described with reference to the schematic drawings, wherein:
- Figures 1 and 2 are front views of a beverage machine according to the invention having a beverage outlet and a cup support that is movable under the outlet for placing a small cup under the outlet and movable away from under the outlet for placing a large cup under the outlet as illustrated in Figs 1 and 2, respectively;
- Figures 3a to 3d illustrate schematically the operation and the fluid line of a capsule handling device of the machine of Figs 1 and 2;
- Figures 4 and 5 are side view of the beverage machine shown in Figs 1 and 2 with a service unit inserted into and removed from its machine as illustrated in Figs 4 and 5, respectively; and
- Figures 6 and 7 are top views of the beverage machine shown in Figs 1 and 2 with a cover for covering a capsule insertion opening, the cover being in the closed position over and across the opening and in the open position away from the opening, as illustrated in Figs 6 and 7, respectively.

### Detailed description

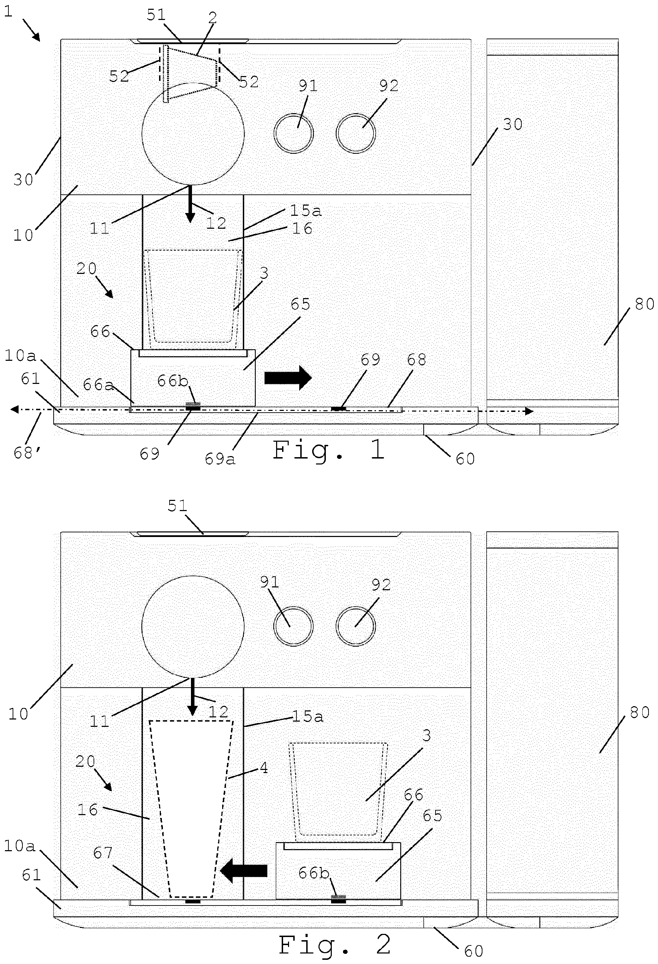

As illustrated in Figures 1 to 7, an exemplary embodiment of a machine 1 according to the invention is configured for dispensing a beverage 84.

Machine 1 has an external housing 10,30,30',40,50,60 with an external front face 10. Typically, housing 10,30,30',40,50,60 further includes at least one of: one or more external lateral side faces 30,30'; an external rear face 40; an external top face 50; and an external bottom face 60.

Machine 1 includes a beverage outlet 11 located on the external front face 10.

Machine 1 also has a movable user-receptacle support body 65, such as a support body 65 that is movable between a first position for placing on a upper placement surface 66 of body 65 a short user-receptacle 3 under outlet 11 and a second position for placing a large user-receptacle 4 under outlet 11 (Figs 1 and 2). For instance, these first and second positions are located in front of the external front face 10.

Machine 1 is provided with a connection means 68,69,69a for connecting user-receptacle support body 65 to external front face 10 (Figs 1-2 and 6-7).

User-receptacle support body 65 can have a connector 66a,66b that is connected or connectable to connection means 68,69,69a to maintain user-receptacle body 65 in the first and second positions (Figs 1 and 2). For instance, connection means 68,69,69a guides user-receptacle body 65 from the first position into the second position and vice versa.

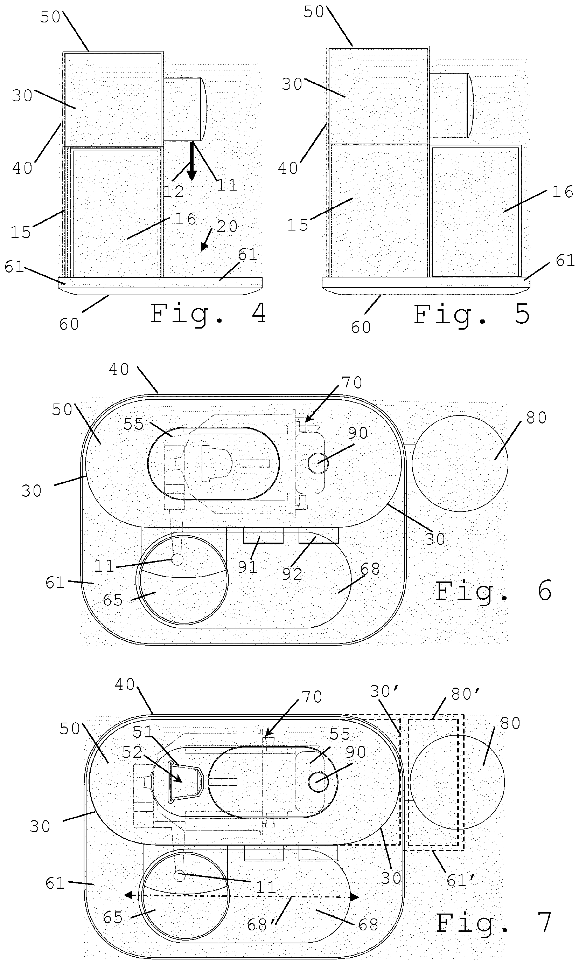

Connection means 68,69,69a may have a direction 68' that extends generally along a bottom part 10a of external front face 10 so that user-receptacle support body 65 is movable with its connector 66a,66b in connection with connection means 68,69,69a from the first position into the second position and vice versa along direction 68' extending along bottom part 10a. See Figs 1 and 7.

Direction 68' of connection means 68,69,69a may extend on: bottom part 10a of external front face 10; and/or a front area 20 formed by a machine foot 61,61' projecting in front of bottom part 10a of external front face 10 and extending therealong (Figs 1 and 7).

Machine 1 can have a machine bottom face 60, direction 68' of connection means 68,69,69a being generally parallel to bottom face 60 (Fig. 1).

Machine 1 may have two external spaced-apart lateral side faces 30,30', user-receptacle support body 65 being movable with its connector 66a,66b in connection with connection means 68,69,69a from the first position into the second position and vice versa along direction 68' from adjacent or close to one external lateral side face 30 to adjacent or close to the other external lateral side face 30 (Figs 1 and 7).

Connection means 68,69,69a can have a mechanical arrangement comprising at least one of:
- a rail cooperating with a rail connector of support body 65 and/or a groove 68 cooperating with a groove connector 66a of support body 65, such as a rail slider and/or groove slider 66a of support body 65 having a single degree of freedom along the rail and/or the groove when connected thereto, the rail and/or groove and the rail and/or groove slider having optionally a generally dovetail shape for cooperating together along a single degree of freedom (Figs 1-2);
- a belt or chain secured to the user-receptacle support body and movable along the external front face, such as a belt or chain in an open or closed loop; and
- a local releasable positioner for guiding support body 65 into the first position or second position, such as a plug-and-socket positioner or a hook positioner or a snap positioner.

Connection means 69,69a and connector 66b can be magnetically constrained (Figs 1-2).

Connector 66b may include a magnetic field-generating element that is arranged to be magnetically constrained against a corresponding ferromagnetic element of the connection means 68,69a.

Connection means 68,69a can include a magnetic field-generating element that is arranged to be magnetically constrained against a corresponding ferromagnetic element of the connector 66b.

Connection means 68,69a may include a magnetic field-generating element that is arranged to be magnetically constrained against a corresponding magnetic field-generating element of the connector 66b.

The magnetic field-generating element can include an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components.

The ferromagnetic element may be made of at least one of of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

Such magnetic field-generative element and/or such ferromagnetic element can be made of sub-elements dispersed in a polymer matrix or agglomerated with binder.

The connector can have one or more magnetic and/or ferromagnetic elements 66b (Figs 1-2), e.g. pin or rod or cylinder or prism or spot element, the connection means comprising:
- one or more magnetic and/or ferromagnetic local positioner elements 69a, e.g. pin or rod or cylinder or prism or spot element, on a path of connector 66b when user-receptacle support body 65 is moved between the first and second positions along direction 68' generally extending along bottom part 10a, such as at least one of discrete end-of-path positioners and intermediate positioners, e.g. a plurality of spaced apart positioners; and/or
- one or more path elements along a path of connector 66b when user-receptacle support body 65 is moved between first and second positions along direction 68' generally extending along the bottom part 10a, optionally the connection means 69,69a comprising stripe or bar or wire elements or a plurality of side-by-side local positioner elements 69 along direction 68' to from a spotted path and/or end-of-path positioners 69 defining the first and second positions of user-receptacle support body 65.

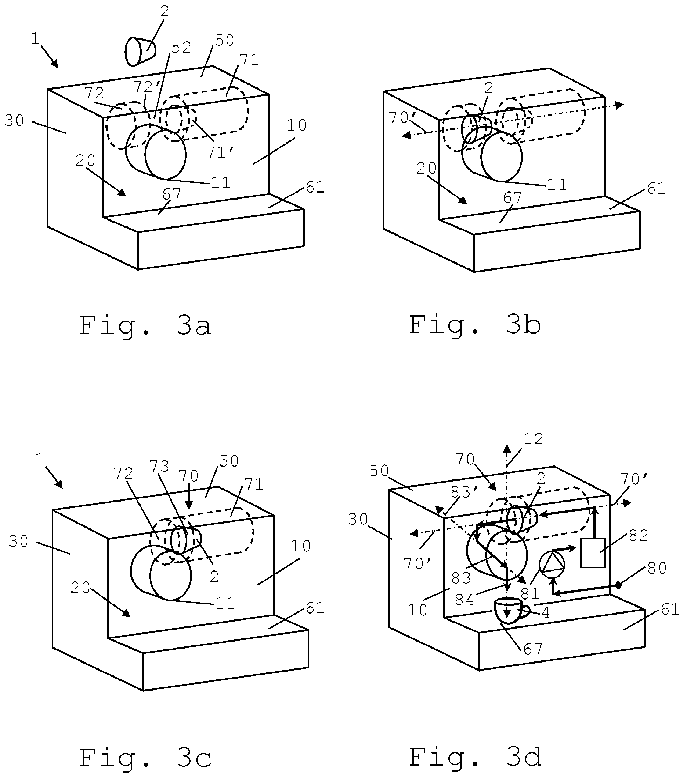

Machine 1 can include a capsule handling device 70 that is located in housing 10,30,30',40,50,60, such as behind external front face 10, and that is fluidically connected to outlet 11 (Figs 3a-3d and Figs 6-7). Device 70 may have a first part 71 and a second part 72 (Fig. 3a) that are relatively movable between: a transfer position (Figs 3a-3b) for receiving and/or evacuating a capsule 2 containing a beverage ingredient; and an extraction position (Figs 3c-2d) for extracting capsule 2 between the first and second parts 71,72.

For instance, first and second parts 71,72 are movable manually, such as by a user-handle (e.g. as disclosed in WO 2005/004683 or WO 2007/135136), and/or movable automatically, such as by a motor (e.g. as disclosed in EP1767129 or WO 2012/025258), between the transfer and the extraction positions.

First and second parts 71,72 may be arranged to form in the extraction position a mixing chamber 73 for housing capsule 2 (Fig. 3c-3d), e.g. a brewing chamber 73. For instance, chamber 73 is delimited by at least a cavity 71' in one part 71 of first and second parts 71,72 and by a cooperating cavity or lid 72' formed by the other part 72 of first and second parts 71,72 (Fig. 3a).

At least one part 72 of first and second parts 71,72 of capsule handling device 70 can be arranged to translate towards and away from at least one of the two external lateral side faces 30,30' when first and second parts 71,72 relatively move between the transfer and the extraction positions (Figs 3a-3d and 6-7).

As illustrated in Figs 3a-3d, downstream part 72 is movable towards and away from side face 30,30'. This corresponds to a configuration of a capsule handling device as for instance disclosed in WO 2012/025258. Obviously, it is possible to move the upstream part of the capsule handling device towards and away from side face 30,30', e.g. with a capsule handling device configuration as for instance disclosed in WO2007/135136. In a yet further alternative, it is also possible to have both the upstream and the downstream part moving towards and away from side faces 30,30'.

This at least one part 72 of first and second parts 71,72 that is arranged to translate towards and away from one of the two external lateral side faces 30,30' can be configured to move generally in parallel to at least one of: external front face 10; external rear face 40 (when present); external top face 50 (when present); and external bottom face 60 (when present). See Figs 3a-3d and 6-7.

First and second parts 71,72 may be relatively movable between a transfer position for receiving and/or evacuating capsule 2 and an extraction position for extracting capsule 2 between first and second parts 71,72 along a translation axis 70' that intercepts at least one of first and second external lateral side faces 30,30' (Figs 3b and 3d). Translation axis 70' may extend generally in parallel to at least one of: external front face 10; external rear face 40 (when present); external top face 5 (when present); and external bottom face 60 (when present). See Figs 3a-3d.

Machine 1 may include a fluid circuit for circulating beverage ingredient from capsule 2 when extracted between first and second parts 71,72, the fluid circuit being fluidically connected to a source of liquid 80,80' and comprising a liquid driver 81, such as a pump, for driving liquid from source 80,80' into capsule handling device 70 for feeding the liquid to capsule 2, for instance via a temperature conditioner 82, such as a heater and/or a cooler, and via an inlet of the first or second part 71,72. See Fig. 3d.

Machine 1 may include a user-interface 90 configured to control liquid driver 81 to drive liquid from source of liquid 80,80' into capsule handling device 70. See Figs 6-7.

Machine 1 can have or more further user-interfaces 91,92 such as further user-interfaces 91,92 for setting at least one parameter relating to beverage preparation, power management and machine servicing. See Figs 1-2. Such beverage preparation parameters may relate to the beverage volumes, beverage temperatures as well as preparation sequences, such as beverages made of different phases such as more or less separate coffee and milk phases, e.g. cappuccinos and latte machiattos.

The at least one part 72 of first and second parts 71,72 that is arranged to translate towards and away from the at least one of the two external lateral side faces 30,30' may be arranged to move generally in parallel to an overall direction of extraction 70' of the beverage ingredient in capsule 2 when extracted between first and second parts 71,72. See Figs 3b and 3d.

Machine 1 can include a fluid guide 83 for fluidically connecting capsule handling device 70 to outlet 11 along a guide direction 83', the overall direction of extraction 70' and a direction 12 of dispensing of beverage 84 out of outlet 11 extending along skew lines. Dispensing direction 12 and guide direction 83' may be in a plane that is generally orthogonal to the overall direction of extraction 70'. See Fig. 3d.

Machine 1 can have a foot 61,61' forming a lower placement surface 67 for a large user-receptacle 4 under outlet 11 and/or supporting movable user-receptacle support body 65 in at least one of the first and second positions. See Figs 1-2.

Machine 1 may comprise a liquid reservoir 80,80', such as a water thank, liquid reservoir 80,80' being in fluid connection with the fluid circuit. See Figs 1-2, 3d and 6-7.

Liquid reservoir 80,80' can be removable from such machine 1 for servicing, such as for filling, emptying and/or cleaning.

Liquid reservoir 80,80' may be mounted on a machine foot 61' projecting beyond:
- at least one of external lateral side faces 30', the reservoir 80' being located adjacent to at least one of the external side faces (Fig. 7);
- the external front face, the reservoir being located adjacent to the external front face; or
- the external rear face, the reservoir being located adjacent to the external rear face.

Liquid reservoir 80,80' can have a shape that extends over substantially at least one of the entire external lateral side face 30' and/or over substantially the entire external rear face (Fig. 7).

Liquid reservoir 80,80' may have a shape that is generally parallelpipedic (Fig. 7).

Liquid reservoir 80 may have a shape that is generally cylindrical with a circular or part-circular or crescent or elliptic or semi-elliptic base (Fig. 6-7).

External top face 50 can have a capsule insertion opening 51 leading into a passage 52 for guiding capsule 2 to capsule handling device 70 and to a position between first and second parts 71,72 of handling device 70 in the transfer position, which parts 71,72 are then relatively movable to their extraction position for extracting capsule 2. See Figs 6-7. For instance, capsule insertion opening 51 is associated with a cover 55 that is movable adjacent to external housing 10,30,30',40,50,60, such as slidable and/or pivotable, between an open position away from opening 51 for allowing insertion of capsule 2 into passage 52 via opening 51 and a closed position over or across opening 51 to prevent insertion of capsule 2 into passage 52 via opening 51.

For example, such machine 1 has a user-interface 90 which is operable by a user to extract capsule 2 between first and second parts 71,72 in their extraction position.

User-interface 90 can be covered by the cover 55 when cover 55 is in the open position so that user-interface 90 is inoperable by a user when capsule handling device 70 is accessible from outside via opening 51 and passage 52. See Fig. 7.

User-interface 90 can be uncovered by cover 55 when cover 55 is in the closed position so that user-interface 90 is operable by a user when capsule handling device 70 is inaccessible from outside via opening 51 and passage 52. See Fig. 6.

Machine 1 can have a seat 15 for receiving a removable service unit 16 via an opening 15a in external front face 10.

Service unit 16 may comprise a receptacle for collecting waste material such as capsules 2 upon use and/or residual liquid. See Figs 1-2 and 4-5.

Service unit 16 can include a feeder for supplying the beverage ingredient capsules and/or another ingredient for forming the beverage to be dispensed and/or a cleaning agent.

As illustrated in Figs 1-2 and 4-5, service unit 16 may be prevented from being removed or inserted into seat 15 by a user-receptacle support body 65 when support body 65 is adjacent to and in front of opening 15a:
- in the first position of body 15a, service unit 16 being removable or insertable into seat 15 when support body 65 is in the second position; or
- in the second position of body 15a, service unit 16 being removable or insertable into seat 15 when support body 65 is in the first position.

Capsule handling device 70 can be so arranged as to evacuate capsule 2 to removable service unit 16 when located in seat 15.

## Claims

1. A machine (1) for dispensing a beverage (84), such as a beverage prepared from a capsule (2) containing a beverage ingredient, comprising:
- an external housing (10,30,30',40,50,60) having an external front face (10) and optionally at least one of: one or more external lateral side faces (30,30'); an external rear face (40); an external top face (50); and an external bottom face (60);
- a beverage outlet (11) located on the external front face (10);
- a user-receptacle support body (65) movable between a first position for placing on a upper placement surface (66) of the body (65) a short user-receptacle (3) under the outlet (11) and a second position for placing a large user-receptacle (4) under the outlet (11), optionally said first and second positions being located in front of the external front face (10); and
- a connection means (68,69,69a) for connecting the user-receptacle support body (65) to the external front face (10),
the user-receptacle support body (65) having a connector (66a,66b) that is connected or connectable to the connection means (68,69,69a) to maintain the user-receptacle body (65) in the first and second positions, and for instance to guide the user-receptacle body (65) from the first position into the second position and vice versa,
**characterised in that** the connection means (68,69,69a) has a direction (68') that extends generally along a bottom part (10a) of the external front face (10) so that the user-receptacle support body (65) is movable with its connector (66a,66b) in connection with the connection means (68,69,69a) from the first position into the second position and vice versa along said direction (68') extending along the bottom part (10a), optionally the direction (68') of the connection means (68,69,69a) extending on:
- the bottom part (10a) of the external front face (10); and/or
- a front area (20) formed by a machine foot (61,61') projecting in front of the bottom part (10a) of the external front face (10) and extending along the external front face (10).

2. The machine of claim 1, which has:
- a machine bottom face (60) and wherein the direction (68') of the connection means (68,69,69a) is generally parallel to the bottom face (60); and/or
- said two external spaced-apart lateral side faces (30,30') and wherein the user-receptacle support body (65) is movable with its connector (66a,66b) in connection with the connection means (68,69,69a) from the first position into the second position and vice versa along said direction (68') from adjacent or close to one external lateral side face (30) to adjacent or close to the other external lateral side face (30).

3. The machine of any preceding claim, wherein the connection means (68) has a mechanical arrangement comprising at least one of:
- a rail cooperating with a rail connector of the support body (65) and/or a groove (68) cooperating with a groove connector (66a) of the support body (65), such as a rail slider and/or groove slider (66a) of the support body having a single degree of freedom along the rail and/or the groove when connected thereto, the rail and/or groove and the rail and/or groove slider having optionally a generally dovetail shape for cooperating together along a single degree of freedom;
- a belt or chain secured to the user-receptacle support body and movable along the external front face, such as a belt or chain in an open or closed loop; and
- a local releasable positioner for guiding the support body (65) into the first position or second position, such as a plug-and-socket positioner or a hook positioner or a snap positioner.

4. The machine of any preceding claim, wherein the connection means (69,69a) and the connector (66b) are magnetically constrained, optionally:
- the connector (66b) comprising a magnetic field-generating element that is arranged to be magnetically constrained against a corresponding ferromagnetic element of the connection means (68,69a); or
- the connection means (68,69a) comprising a magnetic field-generating element that is arranged to be magnetically constrained against a corresponding ferromagnetic element of the connector (66b); or
- the connection means (68,69a) comprising a magnetic field-generating element that is arranged to be magnetically constrained against a corresponding magnetic field-generating element of the connector (66b),
for instance:
- the magnetic field-generating element comprising an electromagnet element or a permanent magnet element, e.g. made of at least one of iron, nickel, cobalt, rare earth metals, e.g. lanthanide, and alloys and oxides containing such metals as well as polymers (e.g. plastics) carrying such elements and components; and/or
- the ferromagnetic element being made of at least one of of Co, Fe, Fe₂O₃, FeOFe₂O₃, NiOFe₂O₃, CuOFe₂O₃, MgO Fe₂O₃, Nd₂Fe₁₄B, Mn, Bi, Ni, MnSb, MnOFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂VAl, Mn₂VGa and Co₂FeGe.

5. The machine of claim 4, wherein the connector comprises one or more magnetic and/or ferromagnetic elements (66b), e.g. pin or rod or cylinder or prism or spot element, and wherein the connection means comprises:
- one or more magnetic and/or ferromagnetic local positioner elements (69a), e.g. pin or rod or cylinder or prism or spot element, on a path of the connector (66b) when the user-receptacle support body (65) is moved between the first and second positions along said direction (68') generally extending along the bottom part (10a), such as at least one of discrete end-of-path positioners and intermediate positioners, e.g. a plurality of spaced apart positioners; and/or
- one or more path elements along a path of the connector (66b) when the user-receptacle support body (65) is moved between the first and second positions along said direction (68') generally extending along the bottom part (10a), optionally the connection means (69,69a) comprising stripe or bar or wire elements or a plurality of side-by-side local positioner elements (69) along said direction (68') to from a spotted path and/or end-of-path positioners (69) defining the first and second positions of the user-receptacle support body (65).

6. The machine of any preceding claim, which comprises a capsule handling device (70) that is located in the housing (10,30,30',40,50,60), such as behind the external front face (10), and that is fluidically connected to the outlet (11), the device having a first part (71) and a second part (72) that are relatively movable between:
- a transfer position for receiving and/or evacuating a capsule (2) containing a beverage ingredient; and
- an extraction position for extracting said capsule (2) between the first and second parts (71,72),
optionally the first and second parts (71,72) being:
- movable manually, such as by a user-handle, and/or movable automatically, such as by a motor, between the transfer and the extraction positions; and/or
- arranged to form in the extraction position a mixing chamber (73) for housing said capsule (2), e.g. a brewing chamber (73), such as a chamber delimited by at least a cavity (71') in one (71) of said first and second parts (71,72) and by a cooperating cavity or lid (72') formed by the other (72) of said first and second parts (71,72),
optionally at least one (72) of the first and second parts (71,72) of the capsule handling device (70) is arranged to translate towards and away from at least one of said two external lateral side faces (30,30') when the first and second parts (71,72) relatively move between the transfer and the extraction positions, for instance said at least one (72) of the first and second parts (71,72) that is arranged to translate towards and away from said at least one of the two external lateral side faces (30,30') is configured to move generally in parallel to at least one of: the external front face (10); said external rear face (40); said external top face (50); and said external bottom face (60).

7. The machine of claim 6, wherein the first and second parts (71,72) are relatively movable between a transfer position for receiving and/or evacuating said capsule (2) and an extraction position for extracting said capsule (2) between the first and second parts (71,72) along a translation axis (70') that intercepts at least one of said first and second external lateral side faces (30,30'), the translation axis (70') extending optionally generally in parallel to at least one of: the external front face (10); said external rear face (40); said external top face (50); and said external bottom face (60) .

8. The machine of claim 6 or 7, which comprises a fluid circuit for circulating beverage ingredient from said capsule (2) when extracted between the first and second parts (71,72), the fluid circuit being fluidically connected to a source of liquid (80,80') and comprising a liquid driver (81), such as a pump, for driving said liquid from the source (80,80') into the capsule handling device (70) for feeding said liquid to said capsule (2), for instance via a temperature conditioner (82), such as a heater and/or a cooler, and via an inlet of the first or second part (71,72), such machine (1) optionally including:
- a user-interface (90) configured to control the liquid driver (81) to drive said liquid from the source of liquid (80,80') into the capsule handling device (70); and/or
- one or more further user-interfaces (91,92) such as further user-interfaces (91,92) for setting at least one parameter relating to beverage preparation, power management and machine servicing.

9. The machine of claim 8, wherein said at least one (72) of the first and second parts (71,72) that is arranged to translate towards and away from said at least one of the two external lateral side faces (30,30') is arranged to move generally in parallel to an overall direction of extraction (70') of said beverage ingredient in said capsule (2) when extracted between the first and second parts (71,72).

10. The machine of claim 9, which comprises a fluid guide (83) for fluidically connecting the capsule handling device (70) to the outlet (11) along a guide direction (83'), the overall direction of extraction (70') and a direction (12) of dispensing of said beverage (84) out of the outlet (11) extending along skew lines, optionally the dispensing direction (12) and the guide direction (83') being in a plane that is generally orthogonal to the overall direction of extraction (70').

11. The machine of any preceding claim, which comprises a foot (61,61') forming a lower placement surface (67) for a large user-receptacle (4) under the outlet (11) and/or supporting the movable user-receptacle support body (65) in at least one of the first and second positions.

12. The machine of any one of claims 8 to 11, which comprises a liquid reservoir (80,80'), such as a water thank, the liquid reservoir being in fluid connection with the fluid circuit, optionally the liquid reservoir (80,80') being:
- removable from such machine (1) for servicing, such as for filling, emptying and/or cleaning; and/or
- mounted on a machine foot (61') projecting beyond:
- at least one of said external lateral side faces (30'), the reservoir (80') being located adjacent to said at least one of the external side faces;
- the external front face, the reservoir being located adjacent to the external front face; or
- said external rear face, the reservoir being located adjacent to said external rear face.

13. The machine of claim 12, wherein the liquid reservoir (80,80') has a shape that:
A) extends over substantially at least one of the entire external lateral side face (30') and/or over substantially the entire external rear face;
B) is generally parallelpipedic;
C) is generally cylindrical with a circular or part-circular or crescent or elliptic or semi-elliptic base; or
D) combines at least two of features A), B) and C).

14. The machine of any preceding claim, wherein said external top face (50) has a capsule insertion opening (51) leading into a passage (52) for guiding said capsule (2) to the capsule handling device (70) and to a position between the first and second parts (71,72) of the handling device (70) in the transfer position which parts are then relatively movable to their extraction position for extracting said capsule (2), optionally the capsule insertion opening (51) being associated with a cover (55) that is movable adjacent to the external housing (10,30,30',40,50,60), such as slidable and/or pivotable, between an open position away from the opening (51) for allowing insertion of said capsule into the passage (52) via the opening (51) and a closed position over or across the opening (51) to prevent insertion of said capsule (2) into the passage (52) via the opening (51), for instance such machine (1) having a user-interface (90) which is operable by a user to extract said capsule (2) between the first and second parts (71,72) in their extraction position, the user-interface (90) is:
- covered by the cover (55) when the cover is in the open position so that the user-interface is inoperable by said user when the capsule handling device (70) is accessible from outside via the opening (51) and the passage (52); and
- uncovered by the cover (55) when the cover is in the closed position so that the user-interface is operable by said user when the capsule handling device (70) is inaccessible from outside via the opening (51) and the passage (52).

15. The machine of any preceding claim, which has a seat (15) for receiving a removable service unit (16) via an opening (15a) in the external front face (10), optionally the service unit (16):
- comprising a receptacle for collecting waste material such as capsules (2) upon use and/or residual liquid; and/or
- comprising a feeder for supplying said beverage ingredient capsules (2) and/or another ingredient for forming said beverage (84) to be dispensed and/or a cleaning agent; and/or
- being prevented from being removed or inserted into the seat (15) by the user-receptacle support body (65) when the support body (65) is adjacent to and in front of the opening (15a):
- in the first position of the body (15a), the service unit (16) being removable or insertable into the seat (15) when the support body (65) is in the second position; or
- in the second position of the body (15a), the service unit (16) being removable or insertable into the seat (15) when the support body (65) is in the first position,
optionally the capsule handling device (70) of claim 6 being so arranged as to evacuate said capsule (2) to the removable service unit (16) when located in the seat (15).

## Patentansprüche

1. Maschine (1) zum Ausgeben eines Getränks (84), wie etwa eines Getränks, das aus einer einen Getränkebestandteil enthaltenden Kapsel (2) zubereitet ist, umfassend:
- ein äußeres Gehäuse (10, 30, 30', 40, 50, 60) mit einer äußeren vorderen Fläche (10) und wahlweise mindestens einer von: einer oder mehreren äußeren lateralen Seitenflächen (30, 30'); einer äußeren hinteren Fläche (40); einer äußeren oberen Fläche (50); und einer äußeren unteren Fläche (60);
- einen Getränkeauslass (11), der sich auf der äußeren vorderen Fläche (10) befindet;
- einen Benutzerbehälter-Trägerkörper (65), der zwischen einer ersten Position zum Platzieren eines kurzen Benutzerbehälters (3) unter dem Auslass (11) auf einer oberen Platzierungsoberfläche (66) des Körpers (65) und einer zweiten Position zum Platzieren eines großen Benutzerbehälters (4) unter dem Auslass (11) verschiebbar ist, wobei die erste und zweite Position sich wahlweise vor der äußeren vorderen Fläche (10) befinden; und
- ein Verbindungsmittel (68, 69, 69a) zum Verbinden des Benutzerbehälter-Trägerkörpers (65) mit der äußeren vorderen Fläche (10),
wobei der Benutzerbehälter-Trägerkörper (65) einen Verbinder (66a, 66b) aufweist, der mit dem Verbindungsmittel (68, 69, 69a) verbunden ist oder verbunden werden kann, um den Benutzerbehälter-Trägerkörper (65) in der ersten und zweiten Position zu halten und beispielsweise um den Benutzerbehälter-Trägerkörper (65) von der ersten in die zweite Position und umgekehrt zu führen,
**dadurch gekennzeichnet, dass** das Verbindungsmittel (68, 69, 69a) eine Richtung (68') aufweist, die sich im Allgemeinen entlang eines unteren Teils (10a) der äußeren vorderen Fläche (10) erstreckt, sodass der Benutzerbehälter-Trägerkörper (65) mit seinem Verbinder (66a, 66b) in Verbindung mit dem Verbindungsmittel (68, 69, 69a) von der ersten in die zweite Position und umgekehrt in der Richtung (68') verschiebbar ist, die sich entlang des unteren Teils (10a) erstreckt, wobei sich die Richtung (68') des Verbindungsmittels (68, 69, 69a) wahlweise erstreckt auf:
- dem unteren Teil (10a) der äußeren vorderen Fläche (10); und/oder
- einem vorderen Bereich (20), der durch einen Maschinenfuß (61, 61') gebildet wird, der vor dem unteren Teil (10a) der äußeren vorderen Fläche (10) vorsteht und sich entlang der äußeren vorderen Fläche (10) erstreckt.

2. Maschine nach Anspruch 1, die aufweist:
- eine untere Fläche (60) der Maschine, und wobei die Richtung (68') des Verbindungsmittels (68, 69, 69a) im Allgemeinen parallel zu der unteren Fläche (60) ist; und/oder
- die beiden äußeren, voneinander beabstandeten lateralen Seitenflächen (30, 30'), und wobei der Benutzerbehälter-Trägerkörper (65) mit seinem Verbinder (66a, 66b) in Verbindung mit dem Verbindungsmittel (68, 69, 69a) von der ersten in die zweite Position und umgekehrt in der Richtung (68') von oder nahe einer äußeren lateralen Seitenfläche (30) zu der oder in die Nähe der anderen äußeren lateralen Seitenfläche (30) verschiebbar ist.

3. Maschine nach einem der vorstehenden Ansprüche, wobei das Verbindungsmittel (68) eine mechanische Anordnung aufweist, umfassend mindestens eines von:
- einer Schiene, die mit einem Schienenverbinder des Trägerkörpers (65) zusammenwirkt, und/oder einer Nut (68), die mit einem Nutverbinder (66a) des Trägerkörpers (65) zusammenwirkt, wie etwa einem Schienengleiter und/oder Nutgleiter (66a) des Trägerkörpers, der einen einzigen Freiheitsgrad entlang der Schiene und/oder der Nut aufweist, wenn er damit verbunden ist, wobei die Schiene und/oder Nut und der Schienen- und/oder Nutgleiter wahlweise eine im Allgemeinen schwalbenschwanzförmige Form aufweisen, um entlang eines einzigen Freiheitsgrads zusammenzuwirken;
- einem Riemen oder einer Kette, am Benutzerbehälter-Trägerkörper befestigt und entlang der äußeren vorderen Fläche verschiebbar, wie etwa einem Riemen oder einer Kette in einer offenen oder geschlossenen Schleife; und
- einem lokalen lösbaren Positionierer zum Führen des Trägerkörpers (65) in die erste Position oder zweite Position, wie etwa einem Steckpositionierer oder einem Hakenpositionierer oder einem Schnapppositionierer.

4. Maschine nach einem der vorstehenden Ansprüche, wobei das Verbindungsmittel (69, 69a) und der Verbinder (66b) magnetisch gehalten werden, wobei wahlweise:
- der Verbinder (66b) ein Magnetfelderzeugungselement umfasst, das so angeordnet ist, dass es magnetisch gegen ein entsprechendes ferromagnetisches Element des Verbindungsmittels (68, 69a) gehalten wird; oder
- das Verbindungsmittel (68, 69a) ein Magnetfelderzeugungselement umfasst, das so angeordnet ist, dass es magnetisch gegen ein entsprechendes ferromagnetisches Element des Verbinders (66b) gehalten wird; oder
- das Verbindungsmittel (68, 69a) ein Magnetfelderzeugungselement umfasst, das so angeordnet ist, dass es magnetisch gegen ein entsprechendes Magnetfelderzeugungselement des Verbinders (66b) gehalten wird,
wobei zum Beispiel:
- das Magnetfelderzeugungselement ein Elektromagnetelement oder ein Permanentmagnetelement umfasst, das zum Beispiel aus mindestens einem von Eisen, Nickel, Kobalt, Seltenerdmetallen, zum Beispiel Lanthanid, sowie Legierungen und Oxiden, die solche Metalle enthalten, und Polymeren (zum Beispiel Kunststoffen), die solche Elemente und Komponenten tragen, besteht; und/oder
- das ferromagnetische Element aus mindestens einem von Co, Fe, Fe₂O₃, FeOFe₂O₃, NiOFe₂O₃, CuOFe₂O₃, MgOFe₂O₃, Nd₂Fe₁₄B, Mn, Bi, Ni, MnSb, MnFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂Val, Mn₂VGa und Co₂FeGe besteht.

5. Maschine nach Anspruch 4, wobei der Verbinder ein oder mehrere magnetische und/oder ferromagnetische Elemente (66b), zum Beispiel Stift- oder Stab- oder Zylinder- oder Prisma- oder Punktelement, umfasst und wobei das Verbindungsmittel umfasst:
- ein oder mehrere magnetische und/oder ferromagnetische lokale Positionierelemente (69a), zum Beispiel Stift- oder Stab- oder Zylinder- oder Prisma- oder Punktelement, auf einem Weg des Verbinders (66b), wenn der Benutzerbehälter-Trägerkörper (65) zwischen der ersten und zweiten Position in der Richtung (68') verschoben wird, die sich im Allgemeinen entlang des unteren Teils (10a) erstreckt, wie etwa mindestens einen von diskreten Weg-Ende-Positionierern und Zwischenpositionierern, zum Beispiel eine Vielzahl von voneinander beabstandeten Positionierern; und/oder
- ein oder mehrere Wegelemente entlang eines Wegs des Verbinders (66b), wenn der Benutzerbehälter-Trägerkörper (65) zwischen der ersten und zweiten Position in der Richtung (68') verschoben wird, die sich im Allgemeinen entlang des unteren Teils (10a) erstreckt, wobei das Verbindungsmittel (69, 69a) wahlweise Streifen- oder Stab- oder Drahtelemente oder eine Vielzahl von nebeneinanderliegenden lokalen Positionierelementen (69) in der Richtung (68') zu/von einem punktförmigen Weg- und/oder Weg-Ende-Positionierer (69) umfasst, die die erste und zweite Position des Benutzerbehälter-Trägerkörpers (65) definieren.

6. Maschine nach einem der vorstehenden Ansprüche, die eine Kapselhandhabungsvorrichtung (70) umfasst, die sich in dem Gehäuse (10, 30, 30', 40, 50, 60), wie etwa hinter der äußeren vorderen Fläche (10), befindet und fluidisch mit dem Auslass (11) verbunden ist, wobei die Vorrichtung einen ersten Teil (71) und einen zweiten Teil (72) aufweist, die relativ verschiebbar sind zwischen:
- einer Übergabeposition zum Aufnehmen und/oder Abführen einer Kapsel (2), die einen Getränkebestandteil enthält; und
- einer Extraktionsposition zum Extrahieren der Kapsel (2) zwischen dem ersten und zweiten Teil (71, 72),
wobei der erste und zweite Teil (71, 72) wahlweise:
- zwischen der Übergabe- und Extraktionsposition manuell verschiebbar, wie etwa durch einen Benutzerhandgriff, und/oder automatisch verschiebbar sind, wie etwa durch einen Motor; und/oder
- dafür angeordnet sind, in der Extraktionsposition eine Mischkammer (73) zum Aufnehmen der Kapsel (2) zu bilden, zum Beispiel eine Brühkammer (73), wie etwa eine Kammer, die begrenzt wird durch mindestens einen Hohlraum (71') in einem (71) von dem ersten und zweiten Teil (71, 72) und durch einen zusammenwirkenden Hohlraum oder Deckel (72'), der durch den anderen (72) von dem ersten und zweiten Teil (71, 72) gebildet wird,
wobei wahlweise mindestens einer (72) von dem ersten und zweiten Teil (71, 72) der Kapselhandhabungsvorrichtung (70) dafür angeordnet ist, auf mindestens eine der beiden äußeren lateralen Seitenflächen (30, 30') zu und von dieser weg translatorisch verschoben zu werden, wenn sich der erste und zweite Teil (71, 72) relativ zwischen der Übergabe- und der Extraktionsposition bewegen, wobei zum Beispiel mindestens einer (72) von dem ersten und zweiten Teil (71, 72), der dafür angeordnet ist, auf die mindestens eine der beiden äußeren lateralen Seitenflächen (30, 30') zu und von ihr weg translatorisch verschoben zu werden, so konfiguriert ist, dass er im Allgemeinen parallel zu mindestens einer der Folgenden verschoben wird: der äußeren vorderen Seitenfläche (10); der äußeren hinteren Fläche (40); der äußeren oberen Fläche (50); und der äußeren unteren Fläche (60).

7. Maschine nach Anspruch 6, wobei der erste und zweite Teil (71, 72) relativ verschiebbar sind zwischen einer Übergabeposition zum Aufnehmen und/oder Abführen der Kapsel (2) und einer Extraktionsposition zum Extrahieren der Kapsel (2) zwischen dem ersten und zweiten Teil (71, 72) entlang einer Translationsachse (70'), die mindestens eine von der ersten und zweiten äußeren lateralen Seitenfläche (30, 30') schneidet, wobei sich die Translationsachse (70') wahlweise im Allgemeinen parallel zu mindestens einer der Folgenden erstreckt: der äußeren vorderen Fläche (10); der äußeren hinteren Fläche (40); der äußeren oberen Fläche (50); und der äußeren unteren Fläche (60).

8. Maschine nach Anspruch 6 oder 7, die einen Fluidkreislauf zum Umwälzen von Getränkebestandteilen aus der Kapsel (2) bei Extraktion zwischen dem ersten und zweiten Teil (71, 72) umfasst, wobei der Fluidkreislauf mit einer Flüssigkeitsquelle (80, 80') in Fluidverbindung steht und einen Flüssigkeitstreiber (81), wie etwa eine Pumpe, zum Treiben der Flüssigkeit aus der Quelle (80, 80') in die Kapselhandhabungsvorrichtung (70) umfasst, um der Kapsel (2) die Flüssigkeit zuzuführen, zum Beispiel über einen Temperaturkonditionierer (82), wie etwa einen Erhitzer und/oder einen Kühler, und über einen Einlass des ersten oder zweiten Teils (71, 72), wobei die Maschine (1) wahlweise umfasst:
- eine Benutzerschnittstelle (90), die dazu konfiguriert ist, den Flüssigkeitstreiber (81) zu steuern, um die Flüssigkeit aus der Flüssigkeitsquelle (80, 80') in die Kapselhandhabungsvorrichtung (70) zu treiben; und/oder
- eine oder mehrere weitere Benutzerschnittstellen (91, 92), wie etwa weitere Benutzerschnittstellen (91, 92) zum Einstellen mindestens eines Parameters für Getränkezubereitung, Energiemanagement und Maschinenwartung.

9. Maschine nach Anspruch 8, wobei der mindestens eine (72) des ersten und zweiten Teils (71, 72), der dafür angeordnet ist, in Richtung zu und weg von der mindestens einen der beiden äußeren lateralen Seitenflächen (30, 30') translatorisch verschoben zu werden, dafür angeordnet ist, im Allgemeinen parallel zu einer allgemeinen Extraktionsrichtung (70') des Getränkebestandteils in der Kapsel (2) bei Extraktion zwischen dem ersten und zweiten Teil (71, 72) verschoben zu werden.

10. Maschine nach Anspruch 9, umfassend eine Fluidführung (83) zum fluidischen Verbinden der Kapselhandhabungsvorrichtung (70) mit dem Auslass (11) entlang einer Führungsrichtung (83'), wobei die allgemeine Extraktionsrichtung (70') und eine Ausgaberichtung (12) des Getränks (84) aus dem Auslass (11) sich entlang schräger Linien erstrecken, wobei wahlweise die Ausgaberichtung (12) und die Führungsrichtung (83') in einer Ebene liegen, die im Allgemeinen orthogonal zu der allgemeinen Extraktionsrichtung (70') ist.

11. Maschine nach einem der vorstehenden Ansprüche, die einen Fuß (61, 61') umfasst, der eine untere Platzierungsoberfläche (67) für einen großen Benutzerbehälter (4) unter dem Auslass (11) bildet und/oder den verschiebbaren Benutzerbehälter-Trägerkörper (65) in mindestens einer von der ersten und zweiten Position trägt.

12. Maschine nach einem der Ansprüche 8 bis 11, die einen Flüssigkeitsbehälter (80, 80'), wie etwa einen Wassertank, umfasst, wobei der Flüssigkeitsbehälter in Fluidverbindung mit dem Fluidkreislauf steht, wobei der Flüssigkeitsbehälter (80, 80') wahlweise:
- zur Wartung. wie etwa zum Füllen, Entleeren und/oder Reinigen, aus der Maschine (1) entfernt werden kann; und/oder
- auf einem Maschinenfuß (61') montiert ist, der hinausragt über:
- mindestens eine der äußeren lateralen Seitenflächen (30'), wobei der Behälter (80') sich angrenzend an die mindestens eine der äußeren Seitenflächen befindet;
- die äußere vordere Fläche, wobei der Behälter sich angrenzend an die äußere vordere Fläche befindet; oder
- die äußere hintere Fläche, wobei der Behälter sich angrenzend an die äußere hintere Fläche befindet.

13. Maschine nach Anspruch 12, wobei der Flüssigkeitsbehälter (80, 80') eine Form hat, die:
A) sich über im Wesentlichen mindestens eine von der gesamten äußeren lateralen Seitenfläche (30') und/oder über im Wesentlichen die gesamte äußere hintere Fläche erstreckt;
B) im Allgemeinen parallelflach ist;
C) im Allgemeinen zylindrisch mit einer kreisförmigen oder teilkreisförmigen oder sichelförmigen oder elliptischen oder halbelliptischen Basis ist; oder
D) mindestens zwei der Merkmale A), B) und C) kombiniert.

14. Maschine nach einem der vorstehenden Ansprüche, wobei die äußere obere Fläche (50) eine Kapseleinsetzöffnung (51) aufweist, die in einen Durchgang (52) führt, um die Kapsel (2) zu der Kapselhandhabungsvorrichtung (70) und zu einer Position zwischen dem ersten und zweiten Teil (71, 72) der Handhabungsvorrichtung (70) in der Übergabeposition zu führen, wobei die Teile dann relativ zu ihrer Extraktionsposition zum Extrahieren der Kapsel (2) verschiebbar sind, wobei die Kapseleinsetzöffnung (51) wahlweise mit einer Abdeckung (55) verbunden ist, die angrenzend an das äußere Gehäuse (10, 30, 30', 40, 50, 60) verschiebbar ist, wie etwa gleitend und/oder schwenkbar, zwischen einer offenen Position weg von der Öffnung (51), um ein Einsetzen der Kapsel in den Durchgang (52) durch die Öffnung (51) zu ermöglichen, und einer geschlossenen Position über oder quer zu der Öffnung (51), um ein Einsetzen der Kapsel (2) in den Durchgang (52) durch die Öffnung (51) zu verhindern, wobei die Maschine (1) zum Beispiel eine Benutzerschnittstelle (90) aufweist, die von einem Benutzer betätigt werden kann, um die Kapsel (2) zwischen dem ersten und zweiten Teil (71, 72) in deren Extraktionsposition zu extrahieren, wobei die Benutzerschnittstelle (90):
- durch die Abdeckung (55) abgedeckt ist, wenn die Abdeckung in der offenen Position ist, sodass die Benutzerschnittstelle vom Benutzer nicht betätigt werden kann, wenn die Kapselhandhabungsvorrichtung (70) von außen über die Öffnung (51) und den Durchgang (52) zugänglich ist; und
- durch die Abdeckung (55) nicht abgedeckt ist, wenn die Abdeckung in der geschlossenen Position ist, sodass die Benutzerschnittstelle vom Benutzer betätigt werden kann, wenn die Kapselhandhabungsvorrichtung (70) von außen über die Öffnung (51) und den Durchgang (52) nicht zugänglich ist.

15. Maschine nach einem der vorstehenden Ansprüche, die einen Sitz (15) zum Aufnehmen einer entfernbaren Wartungseinheit (16) über eine Öffnung (15a) in der äußeren vorderen Fläche (10) aufweist, wobei die Wartungseinheit (16) optional:
- einen Behälter zum Sammeln von Abfallmaterial wie Kapseln (2) nach Gebrauch und/oder Restflüssigkeit umfasst; und/oder
- eine Zuführeinrichtung zum Zuführen der Getränkebestandteilkapseln (2) und/oder eines anderen Bestandteils zum Bilden des auszugebenden Getränks (84) und/oder eines Reinigungsmittels umfasst; und/oder
- daran gehindert wird, entfernt oder durch den Benutzerbehälter-Trägerkörper (65) in den Sitz (15) eingesetzt zu werden, wenn sich der Trägerkörper (65) an und vor der Öffnung (15a) befindet:
- wobei in der ersten Position des Körpers (15a) die Wartungseinheit (16) entfernt oder in den Sitz (15) eingesetzt werden kann, wenn sich der Trägerkörper (65) in der zweiten Position befindet; oder
- wobei in der zweiten Position des Körpers (15a) die Wartungseinheit (16) entfernt oder in den Sitz (15) eingesetzt werden kann, wenn sich der Trägerkörper (65) in der ersten Position befindet,
wobei wahlweise die Kapselhandhabungsvorrichtung (70) nach Anspruch 6 dafür angeordnet ist, die Kapsel (2) zu der entfernbaren Wartungseinheit (16) abzuführen, wenn sie sich in dem Sitz (15) befindet.

## Revendications

1. Machine (1) pour distribuer une boisson (84), la boisson étant préparée à partir d'une capsule (2) contenant un ingrédient de boisson, comprenant :
- un boîtier externe (10, 30, 30', 40, 50, 60) ayant une face avant externe (10) et facultativement au moins l'une parmi : une ou plusieurs faces de côté latérales externes (30, 30') ; une face arrière externe (40) ; une face supérieure externe (50) ; et une face inférieure externe (60) ;
- une sortie de boisson (11) située sur la face avant externe (10) ;
- un corps de support de réceptacle d'utilisateur (65) mobile entre une première position pour un positionnement sur une surface supérieure de placement (66) du corps (65), un réceptacle d'utilisateur court (3) sous la sortie (11), et une deuxième position pour placer un grand réceptacle d'utilisateur (4) sous la sortie (11), éventuellement lesdites première et deuxième positions étant situées devant la face avant externe (10) ; et
- un moyen de connexion (68, 69, 69a) pour connecter le corps de support de réceptacle d'utilisateur (65) à la face avant externe (10),
le corps de support de réceptacle d'utilisateur (65) ayant un connecteur (66a, 66b) qui est connecté ou connectable au moyen de connexion (68, 69, 69a) pour maintenir le corps de réceptacle d'utilisateur (65) dans les première et deuxième positions, et par exemple pour guider le corps de réceptacle d'utilisateur (65) de la première position à la deuxième position et vice-versa,
**caractérisée en ce que** le moyen de connexion (68, 69, 69a) a une direction (68') qui s'étend généralement le long d'une partie inférieure (10a) de la face avant externe (10) de sorte que le corps de support de réceptacle d'utilisateur (65) est mobile avec son connecteur (66a, 66b) en relation avec le moyen de connexion (68, 69, 69a) depuis la première position vers la deuxième position et inversement le long de ladite direction (68') s'étendant le long de la partie inférieure (10a), facultativement la direction (68') du moyen de connexion (68, 69, 69a) s'étendant sur :
- la partie inférieure (10a) de la face avant externe (10) ; et/ou
- une zone avant (20) formée par un pied de machine (61, 61') faisant saillie devant la partie inférieure (10a) de la face avant externe (10) et s'étendant le long de la face avant externe (10).

2. Machine selon la revendication 1, qui a :
- une face inférieure de machine (60) et dans laquelle la direction (68') du moyen de connexion (68, 69, 69a) est généralement parallèle à la face inférieure (60) ; et/ou
- lesdites deux faces de côté latérales espacées externes (30, 30') et dans laquelle le corps de support de réceptacle d'utilisateur (65) est mobile avec son connecteur (66a, 66b) en liaison avec le moyen de connexion (68, 69, 69a) de la première position à la deuxième position et inversement le long de ladite direction (68') depuis une position adjacente ou proche d'une face de côté latérale externe (30) à une position adjacente ou proche de l'autre face de côté latérale externe (30).

3. Machine selon une quelconque revendication précédente, dans laquelle le moyen de connexion (68) a un agencement mécanique comprenant au moins l'un :
- d'un rail coopérant avec un raccord de rail du corps de support (65) et/ou une rainure (68) coopérant avec un raccord de rainure (66a) du corps de support (65), tel qu'un coulisseau de rail et/ou un coulisseau de rainure (66a) du corps de support ayant un seul degré de liberté le long du rail et/ou de la rainure lorsqu'il lui est raccordé, le rail et/ou la rainure et le coulisseau de rail et/ou de rainure ayant facultativement une forme généralement en queue d'aronde pour coopérer ensemble le long d'un degré unique de liberté ;
- d'une courroie ou d'une chaîne fixée au corps de support de réceptacle d'utilisateur et mobile le long de la face avant externe, telle qu'une courroie ou une chaîne dans une boucle ouverte ou fermée ; et
- d'un dispositif de positionnement libérable local pour guider le corps de support (65) dans la première position ou dans la deuxième position, tel qu'un dispositif de positionnement à fiche et prise ou un dispositif de positionnement à crochet ou un dispositif de positionnement à encliquetage.

4. Machine selon une quelconque revendication précédente, dans laquelle le moyen de connexion (69, 69a) et le connecteur (66b) sont magnétiquement contraints, éventuellement :
- le connecteur (66b) comprenant un élément de génération de champ magnétique, qui est agencé pour être magnétiquement contraint contre un élément ferromagnétique correspondant du moyen de connexion (68, 69a) ; ou
- le moyen de connexion (68, 69a) comprenant un élément de génération de champ magnétique qui est agencé pour être magnétiquement contraint contre un élément ferromagnétique correspondant du connecteur (66b) ; ou
- le moyen de connexion (68, 69a) comprenant un élément de génération de champ magnétique qui est agencé pour être magnétiquement contraint contre un élément de génération de champ magnétique correspondant du connecteur (66b), par exemple :
- l'élément de génération de champ magnétique comprenant un élément électroaimant ou un élément aimant permanent, par exemple constitué d'au moins l'un parmi le fer, le nickel, le cobalt, des métaux des terres rares, par exemple le lanthanide et des alliages et oxydes contenant de tels métaux ainsi que des polymères (par exemple, des plastiques) portant de tels éléments et composants ; et/ou
- l'élément ferromagnétique étant constitué d'au moins un parmi Co, Fe, Fe₂O₃, FeOFe₂O₃, NiOFe₂O₃, CuOFe₂O₃, MgOFe₂O₃, Nd₂Fe₁₄B, Mn, Bi, Ni, MnSb, MnFe₂O₃, Y₃Fe₅O₁₂, CrO₂, MnAs, Gd, Dy, EuO, Cu₂MnAl, Cu₂MnIn, Cu₂MnSn, Ni₂MnAl, Ni₂MnIn, Ni₂MnSn, Ni₂MnSb, Ni₂MnGa, Co₂MnAl, Co₂MnSi, Co₂MnGa, Co₂MnGe, SmCo₅, Sm₂Co₁₇, Pd₂MnAl, Pd₂MnIn, Pd₂MnSn, Pd₂MnSb, Co₂FeSi, Fe₃Si, Fe₂Val, Mn₂VGa et Co₂FeGe.

5. Machine selon la revendication 4, dans laquelle le connecteur comprend un ou plusieurs éléments magnétiques et/ou ferromagnétiques (66b), par exemple une broche ou une tige ou un cylindre ou un prisme ou un élément ponctuel, et dans laquelle le moyen de connexion comprend :
- un ou plusieurs éléments positionneur locaux magnétiques et/ou ferromagnétiques (69a), par exemple une broche ou une tige ou un cylindre ou un prisme ou un élément ponctuel, sur un trajet du connecteur (66b) lorsque le corps de support de réceptacle d'utilisateur (65) est déplacé entre les première et deuxième positions le long de ladite direction (68') s'étendant généralement le long de la partie inférieure (10a), comme au moins un parmi un positionneur terminal discret et des positionneurs intermédiaires, par exemple une pluralité de positionneurs espacés ; et/ou
- un ou plusieurs éléments de trajet le long d'un trajet du connecteur (66b) lorsque le corps de support de réceptacle d'utilisateur (65) est déplacé entre les première et deuxième positions le long de ladite direction (68') s'étendant généralement le long de la partie inférieure (10a), éventuellement le moyen de connexion (69, 69a) comprenant des éléments de bande, de barre ou de fil ou une pluralité d'éléments de positionneur local côte à côte (69) le long de ladite direction (68') pour former un trajet ponctué et/ou des positionneurs terminaux (69) définissant les première et deuxième positions du corps de support de réceptacle d'utilisateur (65).

6. Machine selon une quelconque revendication précédente, qui comprend un dispositif de manipulation de capsule (70), qui est situé dans le boîtier (10, 30, 30', 40, 50, 60), tel que derrière la face avant externe (10), et qui est raccordé fluidiquement à la sortie (11), le dispositif ayant une première partie (71) et une deuxième partie (72), qui sont relativement mobiles entre :
- une position de transfert pour recevoir et/ou évacuer une capsule (2) contenant un ingrédient de boisson ; et
- une position d'extraction pour extraire ladite capsule (2) entre les première et deuxième parties (71, 72),
facultativement les première et deuxième parties (71, 72) étant :
- mobiles manuellement, comme par une poignée d'utilisateur et/ou mobiles automatiquement, comme par un moteur, entre les positions de transfert et d'extraction ; et/ou
- agencées pour former en position d'extraction une chambre de mélange (73) pour loger ladite capsule (2), par exemple une chambre à infusion (73), telle qu'une chambre délimitée par au moins une cavité (71') dans l'une (71) desdites première et deuxième parties (71, 72) et par une cavité ou un capot coopérant(e) (72') formé(e) par l'autre (72) desdites première et deuxième parties (71, 72),
éventuellement au moins l'une (72) des première et deuxième parties (71, 72) du dispositif de manipulation de capsule (70) est agencée pour se déplacer vers et loin d'au moins l'une desdites deux faces de côté latérales externes (30, 30') lorsque les première et deuxième parties (71, 72) se déplacent relativement entre les positions de transfert et d'extraction, par exemple ladite au moins une (72) des première et deuxième parties (71, 72), qui est agencée pour se déplacer vers et loin de ladite au moins une des deux faces de côté latérales externes (30, 30') est configurée pour se déplacer généralement parallèlement à au moins l'une de : la face avant externe (10) ; ladite face arrière externe (40) ; ladite face supérieure externe (50) ; et ladite face inférieure externe (60).

7. Machine selon la revendication 6, dans laquelle les première et deuxième parties (71, 72) sont relativement mobiles entre une position de transfert pour recevoir et/ou évacuer ladite capsule (2) et une position d'extraction pour extraire ladite capsule (2) entre les première et deuxième parties (71, 72) le long d'un axe de translation (70') qui intercepte au moins l'une parmi les première et deuxième faces de côté latérales externes (30, 30'), l'axe de translation (70') s'étendant facultativement de façon généralement parallèle à au moins l'une parmi : la face avant externe (10) ; ladite face arrière externe (40) ; ladite face supérieure externe (50) ; et ladite face inférieure externe (60).

8. Machine selon la revendication 6 ou 7, qui comprend un circuit de fluide pour faire circuler un ingrédient de boisson depuis ladite capsule (2) lorsqu'elle est extraite entre les première et deuxième parties (71, 72), le circuit de fluide étant raccordé fluidiquement à une source de liquide (80, 80') et comprenant un dispositif d'entraînement de liquide (81), tel qu'une pompe, pour entraîner ledit liquide depuis la source (80, 80') dans le dispositif de manipulation de capsule (70) pour alimenter ledit liquide vers ladite capsule (2), par exemple, par le biais d'un dispositif de conditionnement de température (82), tel qu'un élément chauffant et/ou un refroidisseur et via une entrée de la première ou deuxième partie (71, 72), la machine (1) comprenant éventuellement :
- une interface utilisateur (90) configurée pour commander le dispositif d'entraînement de liquide (81) pour entraîner ledit liquide de la source de liquide (80, 80') dans le dispositif de manipulation de capsule (70) ; et/ou
- une ou plusieurs autres interfaces utilisateur (91, 92) telles que d'autres interfaces utilisateur (91, 92) pour régler au moins un paramètre relatif à la préparation de boisson, à la gestion de puissance et à l'entretien de la machine.

9. Machine selon la revendication 8, dans laquelle ladite au moins une (72) des première et deuxième parties (71, 72) qui est agencée pour se déplacer vers et à l'écart de ladite au moins une des deux faces de côté latérales externes (30, 30') est agencée pour se déplacer de façon généralement parallèle à une direction générale d'extraction (70') dudit ingrédient de boisson dans ladite capsule (2) lorsqu'elle est extraite entre les première et deuxième parties (71, 72).

10. Machine selon la revendication 9, qui comprend un guide de fluide (83) pour relier fluidiquement le dispositif de manipulation de capsule (70) à la sortie (11) le long d'une direction de guidage (83'), la direction générale d'extraction (70') et une direction (12) de distribution de ladite boisson (84) par la sortie (11) s'étendant le long de lignes d'inclinaison, facultativement la direction de distribution (12) et la direction de guidage (83') étant dans un plan qui est généralement orthogonal à la direction générale d'extraction (70').

11. Machine selon une quelconque revendication précédente, qui comprend un pied (61, 61') formant une surface de placement inférieure (67) pour un grand réceptacle d'utilisateur (4) sous la sortie (11) et/ou supportant le corps de support de réceptacle d'utilisateur mobile (65) dans au moins l'une des première et deuxième positions.

12. Machine selon l'une quelconque des revendications 8 à 11, qui comprend un réservoir de liquide (80, 80'), tel qu'un réservoir d'eau, le réservoir de liquide étant en communication fluidique avec le circuit de fluide, éventuellement le réservoir de liquide (80, 80') étant :
- amovible d'une telle machine (1) pour l'entretien, comme pour le remplissage, le vidage et/ou le nettoyage ; et/ou
- monté sur un pied de machine (61') faisant saillie au-delà :
- d'au moins une desdites faces de côté latérales externes (30'), le réservoir (80') étant situé de manière adjacente à ladite au moins une des faces de côté externes ;
- la face avant externe, le réservoir étant situé adjacent à la face avant externe ; ou
- ladite face arrière externe, le réservoir étant situé adjacent à ladite face arrière externe.

13. Machine selon la revendication 12, dans laquelle le réservoir de liquide (80, 80') a une forme qui :
A) s'étend sur sensiblement au moins l'une de la totalité de la face de côté latérale externe (30') et/ou sur sensiblement la totalité de la face arrière externe ;
B) est généralement parallélépipédique ;
C) est généralement cylindrique avec une base circulaire ou en partie circulaire ou en croissant ou elliptique ou semi-elliptique ; ou
D) combine au moins deux des caractéristiques A), B) et C).

14. Machine selon une quelconque revendication précédente, dans laquelle ladite face supérieure externe (50) a une ouverture d'insertion de capsule (51) conduisant dans un passage (52) pour guider ladite capsule (2) vers le dispositif de manipulation de capsule (70) et vers une position entre les première et deuxième parties (71, 72) du dispositif de manipulation (70) dans la position de transfert, ces parties étant ensuite relativement mobiles vers leur position d'extraction pour extraire ladite capsule (2), facultativement l'ouverture d'insertion de capsule (51) étant associée à un couvercle (55) qui peut être déplacé adjacent au logement externe (10, 30, 30', 40, 50, 60), comme par glissement et/ou par pivotement, entre une position ouverte à l'écart de l'ouverture (51) pour permettre l'insertion de ladite capsule dans le passage (52) via l'ouverture (51) et une position fermée sur ou à travers l'ouverture (51) pour empêcher l'insertion de ladite capsule (2) dans le passage (52) via l'ouverture (51) par exemple une telle machine (1) comportant une interface utilisateur (90) qui peut être actionnée par un utilisateur pour extraire ladite capsule (2) entre les première et deuxième parties (71, 72) dans leur position d'extraction, l'interface utilisateur (90) est :
- couverte par le couvercle (55) lorsque le couvercle est dans la position ouverte de sorte que l'interface utilisateur ne peut être actionnée par ledit utilisateur lorsque le dispositif de manipulation de capsule (70) est accessible depuis l'extérieur via l'ouverture (51) et le passage (52) ; et
- découverte par le couvercle (55) lorsque le couvercle est dans la position fermée de sorte que l'interface utilisateur peut être actionnée par ledit utilisateur lorsque le dispositif de manipulation de capsule (70) est inaccessible depuis l'extérieur via l'ouverture (51) et le passage (52).

15. Machine selon une quelconque revendication précédente, qui comporte un siège (15) pour recevoir une unité d'entretien amovible (16) via une ouverture (15a) dans la face avant externe (10), facultativement l'unité d'entretien (16) :
- comprenant un réceptacle pour collecter des déchets tels que des capsules (2) lors de l'utilisation et/ou du liquide résiduel ; et/ou
- comprenant un dispositif d'alimentation pour alimenter lesdites capsules d'ingrédient de boisson (2) et/ou un autre ingrédient pour former ladite boisson (84) à distribuer et/ou un agent de nettoyage ; et/ou
- ne pouvant pas être retirée ou insérée dans le siège (15) par le corps de support de réceptacle d'utilisateur (65) lorsque le corps de support (65) est adjacent à, et devant, l'ouverture (15a) :
- dans la première position du corps (15a), l'unité d'entretien (16) étant amovible ou insérable dans le siège (15) lorsque le corps de support (65) est dans la deuxième position ; ou
- dans la deuxième position du corps (15a), l'unité d'entretien (16) étant amovible ou insérable dans le siège (15) lorsque le corps de support (65) est dans la première position,
éventuellement le dispositif de manipulation de capsule (70) selon la revendication 6 étant agencé de manière à évacuer ladite capsule (2) vers l'unité d'entretien (16) amovible lorsqu'il est situé dans le siège (15).
